# EUROPEAN PATENT APPLICATION

(11) **EP 0 634 127 A1**
(43) Date of publication of application: **18.01.1995**
(21) Application number: 94500115.4
(22) Date of filing: 27.06.1994
(51) Int. Cl.: A47J 27/08

(54) **Pressure cooker with heater stand and heat regulation**

(30) Priority: 13.07.1993 ES 9301700
(71) Applicant: FAGOR, S.COOP. LTDA., E-20500 Mondragon (Guipuzcoa) (ES)
(72) Inventor: Umerez Altuna, Javier, E-20500 Mondragon (Guipuzcoa) (ES)

(57) **Abstract**

The pressure cooker (1) is intended for household cooking, and performes cooking processes at any one of three pressure ranges, i.e. high, medium and low pressure, if the vessel (2) is fitted with its lid (7), and also frying and grilling processes with no lid, them being selected from the control panel (10) which indicates whether the cooking pressure is normal or abnormal. Heater stand (3), which is adapted to take the cooking vessel (2), embodies two temperature sensors (22, 23). The attachment between the heater stand and the cooking vessel is accomplished by an integral upright column (11) which guides a travelling member (4) carrying a lid detector, the temperature sensor (22), and ducts (12) for conveying the released steam.

## Description

### TECHNICAL FIELD OF THE INVENTION

The invention relates to a household pressure cooker that is coupled to a specifically adapted heater stand being a self-sufficient appliance having its own means for heating and for controlling the cooking parameters.

### BACKGROUND ART

Cooking pots that have heater plates adapted to the vessel and provided with means for regulating the power are known, like
- the publication of patent EP O 343 325 by SILIT-WERKE, where the pressure cooker is provided with an internal pressure sensor housed in an adaptor that is coupled to the vessel lid, and which is linked to the heater plate simply by an not guided electric wire, in order to regulate the power during cooking; this arrangement has no means of physically coupling the two parts comprising the vessel and the heater plate, and shows the disadvantage that the various parts of the detector and the means of electrical connection are liable to suffer from soiling, moisture and being accidentally struck, with the resulting risk of their malfunctioning or becoming damaged, while in addition it only regulates the cooking with pressure inside the vessel,
- the publication of patent EP-0 348 298 by SEB, S.A. describes a method for regulating the various cooking processes in a vessel that is adapted to a heater plate, based upon temperature measurement in the wall of the vessel and the heater element by means of respective sensors located inside the plate, which itself is fitted with a control unit and a front panel with hand controls; this arrangement has no means whereby the vessel is coupled to the heater plate, and the bottom of the vessel is merely inserted into a sunken hollow on the heater surface, allowing no pressure cooking to be done inasmuch as there is no connection between the lid of the vessel and the means of control.

Also known are pressure cookers fitted control micro-controllers for boiling processes only, where the relevant heating data is stored in a memory and compared against the temperature rises during successive "delta t" time intervals with the object of adjusting the power range so as to regulate the temperature once the cooking temperature value has been raised EP-74108, or with the object of adjusting the preset cooking time US 4,608,260.

With the control device described in US patent 4,587,405, the elapsing of the cooking time begins to be counted once the steam phase has been reached, that is to say, at 90°C, because the initial heating time is variable, and depends upon the amount of food and water that is contained, while this temperature value is always constant because the vessel is only used for pressure cooking at a single constant pressure value.

### DISCLOSURE OF THE INVENTION

The pressure cooker object of the present invention is a multi-purpose household cooking appliance comprising a vessel provided with a lid that incorporates a steam outlet valve, a heater stand that is specifically adapted to said vessel, and self-contained means for temperature and pressure monitoring, and for regulating the power and the cooking time, which compliance is capable of performing various cooking processes, such as boiling under pressure or not, frying or grilling at various temperatures and pressures in varying sized vessels with no need for any heat sources or control knobs other than those on the pressure cooker itself.

The pressure cooker is furthermore provided with means for coupling the cooking vessel to the heater stand, means for selecting the power, means for setting and monitoring the cooking parameters using a micro-controller, and its own safety and alarm devices.

In addition to the aforementioned advantages of being multi-purpose and the simplicity with which the heater stand can be coupled to different vessels, the pressure cooker of the invention offers the possibility of being handled as a compact appliance, easy removal of the vessel for washing it, and for cleaning the stand and its control knobs, and it avoids any reliance on the user to turn down the power once working pressure has been reached, or to switch it off altogether at the expiry of the preset cooking time.

To fulfil these functions, the appliance heater stand is provided with:
- a sunken hollow, formed by a recess in its upper surface, wherein the heat distributor bottom of the vessel fits snugly to assist its secure location and good contact with the vitro-ceramic plate on which the vessel seats,
- the heating source beneath the vitro-ceramic plate, which may be of the electro-magnetic induction or conventional electric source,
- an upright peripheral column which section is in arch shaped, affixed to and emerging from the rear of the heater stand and rising above the height of the cooker vessel, being the support of the means for coupling the vessel to the heater stand,
- a coupling element to link the lid of the vessel to the heater stand, which is embodied to the said upright column and contains a device to detect the presence of said lid,
- said device to detect the presence of the lid, and a number of sensors to measure the temperature of the vessel,
- a control unit with a panel in including control knobs and indicator lamps, which are arranged for operation and monitoring from the front,
- a chamber to collect water produced by condensing steam, enclosed inside the bottom of the heater stand,

Instead of having the aforementioned sunken hollow in which to accommodate the vessel, the upper surface of the heater stand may be flat, in which case it is provided with a projection located diametrically opposite to, but lower than the upright column, and similarly embodied into the structure of the stand, the purpose of which is to position the vessel on the stand, and, in addition to preventing it from moving thereupon, it provides, in conjunction with the upright column, a way for accurately positioning both the vessel lid and its side wall with respect to the lid absence detector and the temperature sensors embodied in the heater stand.

The vessel lid possesses a cylindrical protrusion close to its periphery. This accommodates the pressure relief valve, and is independent from the lid opening and closing arrangement.

With the cooker vessel placed upon the stand, the first is attached to the other by means of the coupling element, which may be a travelling member embodied in the rear upright column and guided vertically by same. Such travelling member, in the shape of an upturned "L", has internal ducts which house the connection wires for the temperature sensors fitted to the vessel lid, and others which convey the steam emerging from the vessel through its pressure relief valve, and moreover at the end of its horizontal section, there is an inside housing, which in addition to embodying the lid presence detector, fulfils the accommodation of the lid protrusion and the positioning of it accurately with respect to the upright column, while in addition, said housing is fitted with a mechanism and a push-button for the purpose of manually releasing the pressure.

Thanks to the travelling member described, the cooking appliance of the invention allows vessels whose heights may vary in a proportion of up to 2 to 1 to be attached to the stand so that whichever vessel has the optimum capacity for the amount of food and the desired cooking process can be used.

Despite the multi-purpose feature of this attachment arrangement comprising the travelling member carried on the rear upright column, the invention can in practice be constructed using a less costly coupling means, in which case both the aforementioned upright column as well as the travelling member guided by same are replaced by a compact upright column fitted with a special kind of lid presence detector, such as a plain surface key that can be operated upon being pushed by the edge of the lid, and here such coupling means are also capable of accommodating vessels of varying heights. Nonetheless, when the upright column is constructed in this way, it has to dispense with the device for opening the pressure release valve.

The appliance control unit panel located on the front of the heater stand contains the controls and indicator lamps necessary for setting the cooking programme and for monitoring the heater power during the cooking process, and features of this panel are the selector for cooking with or without pressure, the selection and indication of the pressure range being used for cooking, and the indicator lamp to signal that the pressure inside the vessel is normal or high for safety precautions.

### DESCRIPTION OF THE DRAWINGS

FIG. 1 is a said elevation view of the pressure cooker showing cross-sectioned the attachment between the vessel and the heater stand.

FIG. 2 is an overhead plan view of the pressure cooker.

FIG. 3 shows the arrangement of the control knobs and indicators on the control panel.

FIG. 4 is a cross-section view showing an alternative embodiment of the pressure cooker.

FIG. 5 is a graph where pressure is plotted against time when adjusted to one of the three selection pressures values.

### PREFERRED EMBODIMENTS OF THE INVENTION

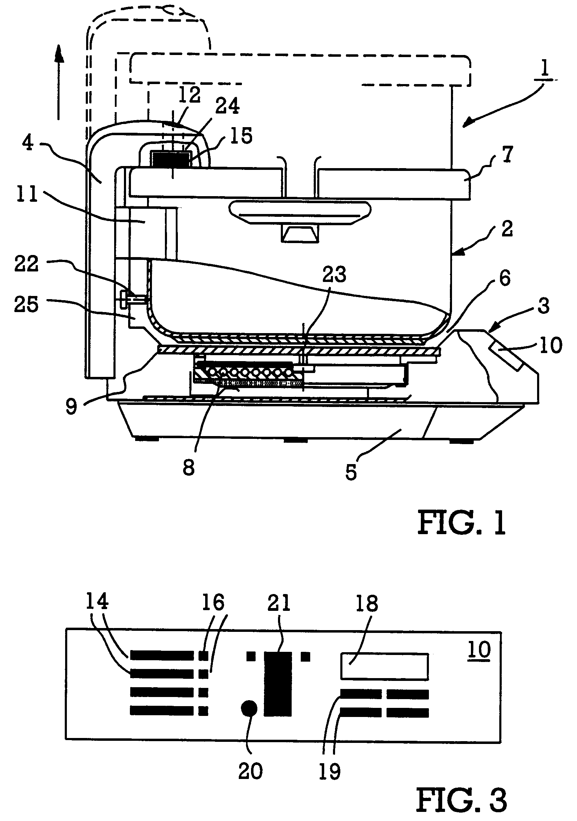

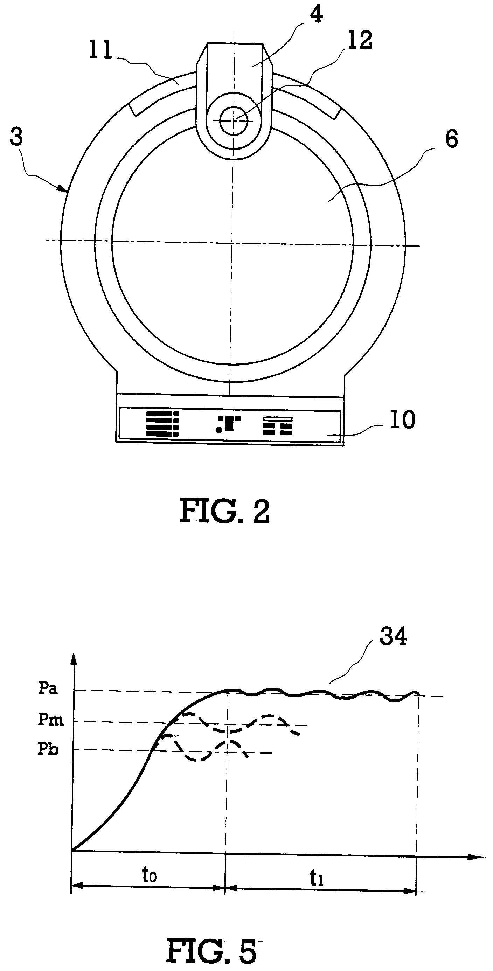

In a first preferential embodiment of the invention, it will be seen from Figures 1 and 2 that pressure cooker 1 comprises the vessel 2 which can be used for cooking processes with the lid 7 and for cooking processes without the lid, and the heater stand 3 which contains the heating means 8, the power control unit 10, the sunken recess 6 for accommodating the vessel upon its supporting and heat transmitting surface which is comprised by the vitro-ceramic plate 9, the exhaust steam condensate water collection chamber 5, and the peripheral upright column 11 which guides the travelling member 4 in the form of an upturned "L" in its up and down motion in order to couple the vessel to the stand, where said travelling member incorporating a lid detector is inserted into a guide groove upon said upright column, whilst its horizontal branch extends across the top of the vessel lid covering the cylindrical protrusion 15 which houses the relief valve.

The accurate positioning of vessel 2 and its lid 7 with respect to the heater stand is achieved by vertically travelling the "L" shaped member 4 to make it cover the cylindrical protrusion 15 on the lid until it becomes inserted in hollow 24, inside which the pressure release device and the spindle of the lid detector (not shown in the Figure) travel. The pressure relief valve belonging to vessel lid 7 is hand operated by means of push button 12 that is coaxial to said housing and protrusion, whilst the lid detector spindle is pushed upwards by protrusion 15 and operates a micro-switch contained inside the travelling member. It is also possible, thanks to the features described, for the exhaust steam from the relief valve to be conveyed through an internal duct in upright column 11 and delivered to the collection chamber 5, or be released to the atmosphere through the hole provided in push button 12.

The vessel temperature is monitored by at least two resistive sensors 22, 23, of which one 22 is in contact with the vertical wall of the vessel at a point above its curved bottom, and the other 23, whose probe lies beneath the vitro-ceramic plate 9 of the heater stand, monitors the temperature at the bottom of the vessel. Both sensors together allow cooking temperature regulation during all processes, either "with pressure" or "without pressure", and also to control the maximum safe heating temperature allowed for the vessel bottom on the stand.

By means of combining said hollow 24 in the travelling member that covers protrusion 15 on the lid, and ensuring that the diameter of vitro-ceramic plate 9 is suited to that of the distributor bottom of the vessel, upright column 11 is kept far enough away so as not to become overheated by the hot wall of the vessel, while at the same time, it ensures good heat contact with the temperature sensor.

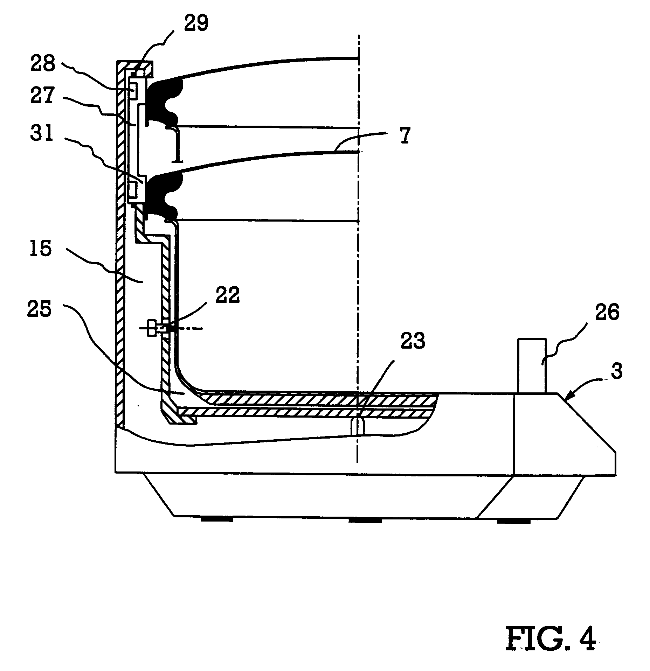

The cooking appliance control unit 10 panel, depicted in Figure 3, lying upon an inclined plane at approximately 45°, takes up the entire front of the heater stand, and possesses a first vertical array of touch sensitive buttons (14) for selecting one or another of the four working pressure ranges, that is to say, "no pressure", "low pressure", "medium pressure" and "high pressure", and each is accompanied by a written nameplate with its adjacent on/off indicator lamp 16, and a second vertical array on the opposite side, providing buttons 19 that are associated with the cooking times, and a visual indicator 18 to show unexpired time. Between the two said arrays of buttons, there is placed next to the main pressure on and off button 21, a normal or abnormal pressure indicator lamp 20 which either flashes or stays alight permanently in either one or the other of these situations respectively.

Controls on the control panel 10, such as the pressure selector, may equally well be constructed in other designs, such as a rotating knob that protrudes from the panel.

In accordance with a second embodiment of the invention (Figure 4), the upright column and travelling member that feature in the embodiment described above, are replaced by an upright column 15 higher than that one which likewise is embodied into the heater stand 3, and upon whose top is included a swinging member 27 or lid detector button, whose thickened ends 31 are respectively positioned at the same height as the lid 7 fitted to each one of the different vessels, and wherever there is a lid present, one of them is pushed so as to operate a micro-switch (not shown in the drawings). When using cooking processes under no pressure, the lid presence detector key 27 is made to return to its idle position if there is no lid present by means of springs 28 housed at either end, the travel of which is limited by the butts 29.

The accurate positioning of vessel with respect to the heater stand is achieved in this second embodiment by its being guided from above between upright column 15 and a diametrically opposed projection 26 so that there is a gap 25 between said upright column 15 and the vertical wall of the vessel and no heat contact can occur between them, although sensor 22 is pressed against the wall. Because of these two guide pieces 15, 26, the heater stand in this embodiment of the invention requires no recess in its surface to accommodate the bottom of the vessel.

In the procedure of the invention for regulating (Figures 3 and 5) the cooking pressure, the user selects the cooking mode by pressing some one of the three keys 14 which give one or another of the relative set ranges of cooking pressure as follows: low (LP), medium (MP), or high (HP), whose respective set values could for instance be 0.5 Kg/cm², 0.8 Kg/cm² and 1.1 Kg/cm², where each one corresponds to a proportional temperature of the water plus the food inside the vessel, which operating temperature values are between 105°C and 122°C are recorded in the micro-controller of the control unit 10, so that once the start button 21 for cooking under pressure has been pressed, they are used as the standard values against which said temperature will be regulated, for which purpose, measuring from temperature probe 22 are used, while the appliance will cycle in line with the graph 34, with the heater power being switched on or off once the point t₀ is reached so as to maintain the selected preset pressure, whereupon the cooking time t₁, as set by means of timer buttons 19, begins to run.

Those cooking process that involve frying or grilling are performed in the vessel with the lid removed, and start when the user presses the "no pressure" key. In this situation, a micro-switch inside the lid detector 27 makes it transmit an electrical signal to the control unit 10, thus establishing that the no lid present condition is fulfilled as required for operation to begin, bearing in mind that for these cooking processes, the micro-controller sets an operating temperature of about 180°C, which is considerably higher than that used for pressure cooking. In this case the temperature measures processed by the micro-processor is that taken by the heat probe 23 in the heater stand.

The temperature measures taken by the probe 23 in the heater stand 9 for the vessel, in addition to fulfilling the preferential function of a safety device, for which purpose a maximum temperature of say 210°C is set in the micro-controller for the different cooking processes, can also be used, as is known, for automatically setting the total necessary cooking time, on the basis of the difference with respect to the measures taken by sensor 22 on the vessel wall during stage t₀ of the heating.

## Claims

**1.-** PRESSURE COOKER WITH HEATER STAND AND CONTROL SYSTEM comprising a cooking vessel and its lid fitted with a steam outlet valve, a heater stand provided with a source of heat, upon which the vessel is accurately placed in position, a control unit with a micro-controller for timing and adjusting the power with a front control panel for selecting and monitoring the different cooking processes as they are performed, and which in order to regulate the power applied, relies upon the temperature measures taken at various points about the vessel by means of sensors arranged in the heater stand characterized in that to perform the different cooking processes with pressure and without pressure by automatically regulating the power being applied, the heater stand (3) is coupled to the vessel (2) fitted with lid (7) for pressure cooking, for which purpose, at the rear of, the stand 3 has embodied in itself an upright column (11, 15) emerging from the periphery, whose height is adjustable to differing amounts as required by different vessels (2) and it projects beyond any of such heights, where such upright column houses a cooker lid presence detector and a working temperature sensor (22) half way up the vessel wall, and moreover assists in the positioning of the vessel and its lid upon the heater stand.

**2.-** PRESSURE COOKER in accordance with the claim 1, wherein in a first embodiment of the pressure cooker, only one part of upright column (11) belongs to the heater stand (3) structure, and it supports and guides in an up and down motion, a second part that is a travelling member (4) in the shape of an upturned "L", the end of whose horizontal arm incorporates a lid detector and a protruding button (12) for pressure releasing, while concentric to the button, there is a lower recess (24) to cover cylindrical protrusion (15) of the lid, where the steam outlet valve is housed, while said protrusion (15) also serving the purpose of accurately positioning the vessel upon the heater stand.

**3.-** PRESSURE COOKER in accordance with the claim 1, wherein that upright column (11) with its travelling member (4) houses the electrical connections from the lid detector and the cooking process sensor (22) to the control unit (10), and it may in addition convey the steam from the outlet to a condensate collection chamber (5) located beneath the heater stand, or allow it to be released directly to the atmosphere by means of pressure release button (12).

**4.-** PRESSURE COOKER in accordance with Claim 1, wherein in a second embodiment of the pressure cooker the upright coupling column (15), upon being straight and rigid throughout the whole of its height, contains at its top, a lid detector (27) in the shape of a dual key, the ends (28) of which are thickened to allow them to come into contact with the lid applied to vessels of differing heights, and where to achieve, in association with the upright column, the accurate positioning of the cooker vessel upon the heater stand, this latter is provided with a diametrically opposite projection (26).

**5.-** PRESSURE COOKER in accordance with Claim 1 wherein the power regulation system allows cooking modes to be performed using any one of the three preset pressure ranges (HP, MP, LP) on the basis of the equivalent temperature values recorded in the micro-controller, and by measuring the cooking temperature half way up the vessel side wall using a probe (22) housed inside the upright column (11).

**6.-** PRESSURE COOKER in accordance with Claims 1 and 5 above, wherein in addition to having operating keys (14, 19) and indicator lamps (16, 18) for cooking modes and timer settings, the panel of the control unit (10) has a start button (21) for initiating pressure cooking, and an indicator lamp (20) to show whether the pressure during the cooking process is normal or abnormal.
